# EUROPEAN PATENT APPLICATION

(11) **EP 4 664 016 A1**
(43) Date of publication of application: **17.12.2025**
(21) Application number: 25182198.9
(22) Date of filing: 12.06.2025
(51) Int. Cl.: F24C 7/08

(54) **COOKING APPLIANCE**

(30) Priority: 12.06.2024 KR 20240076586
(71) Applicant: LG Electronics Inc., Yeongdeungpo-gu Seoul 07336 (KR)
(72) Inventor: LEE, Seung Jun, 07796 Seoul (KR); CHO, Junghyeon, 07796 Seoul (KR)
(74) Representative: Ter Meer Steinmeister & Partner

(57) **Abstract**

Cooking appliance comprising: a heater(120); a heating controller ( 130) configured to control operation of the heater (120); a safety controller (163); a heating switch ( HS) connected between an external power source (1) and the heater (120) ; a safety switch ( SS) connected between the external power source (1) and the heater (120); and a controller (30) configured to control an open or closed state of the safety switch ( SS) according to an operation of the heating controller ( 130) or operation of the safety controller (163), wherein the controller (30) is configured to control the safety switch ( SS) to be closed when the heating controller (130) is changed to an on state while the safety controller (163) is in an on state and the heating controller (130) is in an off state.

## Description

This application claims priority of KR Patent Appl. No. 10-2024-0076586 filed on June 12.

### BACKGROUND

### Field

The disclosure relates to a cooking appliance.

### Description of Related Art

A cooking appliance is a home appliance for cooking food or other items (hereinafter, collectively "food") using heat. The cooking appliance may be classified into an open type cooking appliance and a closed type cooking appliance based on a position of a heater that is a heat source that supplies heat. The closed type cooking appliance includes ovens and microwaves, for example. The open type cooking appliance includes electric and gas stoves, for example.

A user may turn on/off a heater or adjust a heating level of the heater using a control unit or a controller provided in the cooking appliance. However, the heater may be activated by operation not intended by the user. For example, the controller may be operated by a child or a pet, or the controller may be operated due to carelessness of a user. As such, when the heater works regardless of the user's intention, there is a possibility of a fire.

To solve this problem, conventional cooking appliances include a locking function. When the user activates the locking function of the cooking appliance, all operation functions of the controller of the cooking appliance are deactivated, so that unintended operation of the heater may be prevented. However, when the locking function of the cooking appliance is not activated by the user, there is still a possibility that unintended operation of the heater may occur.

### SUMMARY

Thus, it is an object to provide a cooking device capable of preventing a heater from working by operation not intended by a user.

The purposes of the disclosure are not limited to the purpose above-mentioned. Other purposes and advantages of the disclosure that are not mentioned may be understood based on following descriptions, and may be more clearly understood based on embodiments of the disclosure. Further, it will be easily understood that the purposes and advantages of the disclosure may be realized using means shown in the claims or combinations thereof.

The object is solved by the features of the independent claims. Preferred embodiments are given in the dependent claims.

In the disclosure, "upward", "downward", "upper", "lower" may be understood with respect to direction of gravity in a normal, i.e. operational, orientation of the cooking appliance. Similarly, "front portion"/"front surface" for example may be understood as portion/surface facing a user operating the cooking appliance, for example the door of the cooking appliance may form a front surface of the cooking appliance in a closed state of the door. Likewise, "rear portion"/"rear surface" being opposite to "front portion"/"front surface". Also, "forward"/"front direction" is to be understood as towards a user operating the cooking appliance and/or as a horizontal direction perpendicular to the door in a closed state of the door, and "rearward"/"rear direction" may be understood as a direction opposite to "forward"/"front direction".

In a first aspect a cooking appliance is provided comprising: a heater; a heating controller configured to control operation of the heater; a safety controller; a heating switch connected between an external power source and the heater; a safety switch connected between the external power source and the heater; and a controller configured to control an open or closed state of the safety switch according to operation of the heating controller and/or operation of the safety controller.

In one or more embodiments, the controller may be configured to change the safety controller to an off state when the heating controller is not changed to an on state during a first predetermined waiting time while the safety controller is in an on state and the heating controller is in an off state.

In one or more embodiments, the controller may be configured to control a first warning operation to be performed during a predetermined second waiting time when the heating controller is not changed to an on state during a first predetermined waiting time while the safety controller is in an on state and the heating controller is in an off state.

In one or more embodiments, when the heating controller is not changed to the on state during a predetermined first waiting time while the safety controller is in the on state and the heating controller is in the off state, the controller may be configured to perform a first warning operation during a predetermined second waiting time.

In one or more embodiments, when the heating controller is changed to the on state before the second waiting time elapses, the controller may be configured to control the safety switch to be closed.

In one or more embodiments, when the heating controller is not changed to the on state until the second waiting time elapses, or when operation other than operation of the heating controller occurs before the second waiting time elapses, the controller may be configured to terminate the first warning operation.

In one or more embodiments, while the first warning operation is performed, a first warning message may be output from at least one of a display, a speaker, and an operation indicator lamp.

In one or more embodiments, when the heating controller is not changed to the on state until the second waiting time elapses, the controller may be configured to change the safety controller to an off state.

In one or more embodiments, the controller may be configured to change the safety controller to an off state when the heating controller is in an on state at a time when the safety controller is changed from an off state to an on state.

In one or more embodiments, when the heating controller is in an on state while all heaters are not being driven and the safety controller is in an off state, the controller may be configured to perform a second warning operation.

In one or more embodiments, when the heating controller is changed to the on state, the controller may be configured to control the heating switch to be closed.

In one or more embodiments, the cooking appliance may further comprise an operation indicator lamp indicating an operation state of the heater, an operation state of the heating controller, or an open or closed state of the safety switch.

In one or more embodiments, one or a first end of the operation indicator lamp may be connected to the other or a second end of the heating switch, and the other or a second end of the operation indicator lamp may be connected to one or a first end of the safety switch.

In one or more embodiments, one or a first end of the operation indicator lamp may be connected to one or a first end of the heating switch, and the other or a second end of the operation indicator lamp may be connected to the other or a second end of the safety switch.

In one or more embodiments, the cooking appliance may further comprise a heating level adjustment switch configured to be opened and closed according to operation of the heating controller and configured to adjust a heating level of the heater.

In one or more embodiments, one or a first end of the heating level adjusting switch may be connected to the other or a second end of the safety switch, and the other or a second end of the heating level adjusting switch may be connected to the heater.

In one or more embodiments, the controller may be configured to change an on state and off state of the heating switch based on a heating level of the heater.

In one or more embodiments, the cooking appliance may further comprise a safety controller status display area configured to display a status of the safety controller.

In one or more embodiments, the safety controller status display area may be turned on while the safety controller is in an on state and may be turned off while the safety controller is in an off state.

A second aspect of the disclosure provides a cooking appliance comprising: a heater; a heating controller configured to control operation of the heater; a safety controller; a heating switch connected between an external power source and the heater; a safety switch connected between the external power source and the heater; and a controller configured to control an open or closed state of the heating switch or the safety switch according to operation of the heating controller or operation of the safety controller.

In one or more embodiments, when the heating controller is not changed to the on state during a predetermined first waiting time while the safety controller is in the on state and the heating controller is in the off state, the controller may be configured to change the safety controller to the off state.

In one or more embodiments, wherein when the heating controller is changed to an on state while the safety controller is in an on state and the heating controller is in an off state, the controller may be configured to control the safety switch to be closed.

In one or more embodiments, when the heating controller is not changed to the on state during a predetermined first waiting time while the safety controller is in the on state and the heating controller is in the off state, the controller may be configured to perform a first warning operation during a predetermined second waiting time.

In one or more embodiments, when the heating controller is changed to the on state before the second waiting time elapses, the controller may be configured to control the safety switch to be closed.

In one or more embodiments, when the heating controller is not changed to the on state until the second waiting time elapses or when operation other than operation of the heating controller occurs before the second waiting time elapses, the controller may be configured to terminate the first warning operation.

In one or more embodiments, while the first warning operation is performed, a first warning message may be output from at least one of a display, a speaker, and an operation indicator lamp.

In one or more embodiments, when the heating controller is not changed to the on state until the second waiting time elapses, the controller may be configured to change the safety controller to an off state.

In one or more embodiments, when the heating controller is in the on state when the safety controller is changed from an off state to the on state, the controller may be configured to change the safety controller to the off state.

In one or more embodiments, when the heating controller is in an on state while all heaters are not being driven and the safety controller is in an off state, the controller may be configured to perform a second warning operation.

In one or more embodiments, when the heating controller is changed to the on state, the controller may be configured to control the heating switch to be closed.

In one or more embodiments, the cooking appliance may further comprise an operation indicator lamp indicating an operation state of the heater, an operation state of the heating controller, or an open or closed state of the safety switch.

In one or more embodiments, one or a first end of the operation indicator lamp may be connected to the other or a second end of the heating switch, and the other or a second end of the operation indicator lamp may be connected to one or a first end of the safety switch.

In one or more embodiments, one or a first end of the operation indicator lamp may be connected to one or a first end of the heating switch, and the other or a second end of the operation indicator lamp may be connected to the other or a second end of the safety switch.

In one or more embodiments, the cooking appliance may further comprise a heating level adjustment switch configured to be opened and closed according to operation of the heating controller and configured to adjust a heating level of the heater.

In one or more embodiments, one or a first end of the heating level adjusting switch may be connected to the other or a second end of the safety switch, and the other or a second end of the heating level adjusting switch may be connected to the heater.

In one or more embodiments, the controller may be configured to change an on state and off state of the heating switch based on a heating level of the heater.

In one or more embodiments, the cooking appliance may further comprise a safety controller status display area configured to display a status of the safety controller.

In one or more embodiments, the safety controller status display area may be turned on while the safety controller is in an on state and may be turned off while the safety controller is in an off state.

A third aspect of the disclosure provides a cooking appliance comprising: a heater; a heating controller configured to control operation of the heater; a safety controller; and a controller configured to control operation of the heater according to operation of the heating controller or operation of the safety controller.

In one or more embodiments, wherein when the heating controller is changed to an on state while the safety controller is in an on state and the heating controller is in an off state, the controller may be configured to control the heater to be activated.

In one or more embodiments, when the heating controller is not changed to the on state during a predetermined first waiting time while the safety controller is in the on state and the heating controller is in the off state, the controller may be configured to change the safety controller to the off state.

In one or more embodiments, when the heating controller is not changed to the on state during a predetermined first waiting time when the safety controller is changed from the off state to the on state and the heating controller is in the off state, the controller may be configured to perform a first warning operation during a predetermined second waiting time.

In one or more embodiments, when the heating controller is changed to the on state before the second waiting time elapses, the controller may be configured to control the heater to be activated.

In one or more embodiments, when the heating controller is not changed to the on state until the second waiting time elapses or when operation other than operation of the heating controller occurs before the second waiting time elapses, the controller may be configured to terminate the first warning operation.

In one or more embodiments, while the first warning operation is performed, a first warning message may be output from at least one of a display, a speaker, and an operation indicator lamp.

In accordance with some embodiments of the third aspect, when the heating controller is not changed to the on state until the second waiting time elapses, the controller may be configured to change the safety controller to an off state.

In one or more embodiments, when the heating controller is in the on state when the safety controller is changed from an off state to the on state, the controller may be configured to change the safety controller to the off state.

In one or more embodiments, when the heating controller is in an on state while all heaters are not being driven and the safety controller is in an off state, the controller may be configured to perform a second warning operation.

In one or more embodiments, the cooking appliance may further comprise an operation indicator lamp indicating an operation state of the heater, an operation state of the heating controller, or an open or closed state of the safety switch.

In one or more embodiments, the cooking appliance may further comprise a safety controller status display area configured to display a status of the safety controller.

In one or more embodiments, the safety controller status display area may be turned on while the safety controller is in an on state and may be turned off while the safety controller is in an off state.

A fourth aspect of the disclosure provides a cooking appliance comprising: a heater; a heating controller configured to control operation of the heater; a safety controller; and a controller configured to control operation of the heater according to operation of the heating controller or operation of the safety controller.

In one or more embodiments, when the heating controller is not changed to the on state during a predetermined first waiting time while the safety controller is in the on state and the heating controller is in the off state, the controller may be configured to change the safety controller to the off state.

In one or more embodiments, wherein when the heating controller is changed to an on state while the safety controller is in an on state and the heating controller is in an off state, the controller may be configured to control the heater to be activated.

In one or more embodiments, when the heating controller is not changed to the on state during a predetermined first waiting time when the safety controller is changed from the off state to the on state and the heating controller is in the off state, the controller may be configured to perform a first warning operation during a predetermined second waiting time.

In one or more embodiments, when the heating controller is changed to the on state before the second waiting time elapses, the controller may be configured to control the heater to be activated.

In one or more embodiments, when the heating controller is not changed to the on state until the second waiting time elapses or when operation other than operation of the heating controller occurs before the second waiting time elapses, the controller may be configured to terminate the first warning operation.

In one or more embodiments, while the first warning operation is performed, a first warning message may be output from at least one of a display, a speaker, and an operation indicator lamp.

In one or more embodiments, when the heating controller is not changed to the on state until the second waiting time elapses, the controller may be configured to change the safety controller to an off state.

In one or more embodiments, when the heating controller is in the on state when the safety controller is changed from an off state to the on state, the controller may be configured to change the safety controller to the off state.

In one or more embodiments, when the heating controller is in an on state while all heaters are not being driven and the safety controller is in an off state, the controller may be configured to perform a second warning operation.

In one or more embodiments, the cooking appliance may further comprise an operation indicator lamp indicating an operation state of the heater, an operation state of the heating controller, or an open or closed state of the safety switch.

In one or more embodiments, the cooking appliance may further comprise a safety controller status display area configured to display a status of the safety controller.

In one or more embodiments, the safety controller status display area may be turned on while the safety controller is in an on state and may be turned off while the safety controller is in an off state.

A fifth aspect of the disclosure provides a cooking appliance comprising: a heater; a heating controller configured to control operation of the heater; a safety controller; a heating switch connected between an external power source and the heater; a safety switch connected between the external power source and the heater; and a controller configured to control an open or closed state of the safety switch according to operation of the heating controller or operation of the safety controller.

In one or more embodiments, when the heating controller is in an on state when the safety controller has been changed from an off state to an on state, the controller may be configured to maintain the safety controller in an on state during a predetermined first waiting time.

In one or more embodiments, when the heating controller is not changed to the off state for the first waiting time, the controller may be configured to change the safety controller to the off state.

In one or more embodiments, when the heating controller is changed to the on state while the safety controller is in the on state and the heating controller is in the off state, the controller may be configured to control the safety switch to be closed.

In one or more embodiments, when the heating controller is not changed to the on state during a predetermined second waiting time while the safety controller is in the on state and the heating controller is in the off state, the controller may be configured to change the safety controller to the off state.

In one or more embodiments, when both the heating switch and the safety switch are opened while the safety controller is in the on state and both the heating switch and the safety switch are closed, the controller may be configured to maintain the safety controller in the on state until a predetermined third waiting time elapses.

In one or more embodiments, when the heating controller is changed to the on state before the third waiting time elapses, the controller may be configured to control the heating switch and the safety switch to be closed.

In one or more embodiments, when the heating controller is not changed to the on state until the third waiting time elapses, the controller may be configured to change the safety controller to the off state.

In one or more embodiments, when the heating controller is changed to the on state, the controller may be configured to control the heating switch to be closed.

In one or more embodiments, the cooking appliance may further include an operation indicator lamp indicating an operating state of the heater, an operating state of the heating controller, or an open or closed state of the safety switch.

In one or more embodiments, the cooking appliance may further include a safety controller status display area configured to display a status of the safety controller.

In one or more embodiments, the safety controller status display area may be turned on while the safety controller is in an on state and may be turned off while the safety controller is in an off state.

A sixth aspect of the disclosure provides a cooking appliance comprising: a heater; a heating controller configured to control operation of the heater; a safety controller; and a controller configured to control operation of the heater according to operation of the heating controller or operation of the safety controller.

In one or more embodiments, the heater works only while the safety controller is in an on state.

In one or more embodiments, when the heating controller is in an on state when the safety controller has been changed from an off state to the on state, the controller may be configured to maintain the safety controller in the on state during a predetermined first waiting time.

In one or more embodiments, when the heating controller is not changed to the off state for the first waiting time, the controller may be configured to change the safety controller to the off state.

In one or more embodiments, when the heating controller is changed to the on state while the safety controller is in the on state and the heating controller is in the off state, the controller may be configured to control the heater to be activated.

In one or more embodiments, when the heating controller is not changed to the on state during a predetermined second waiting time while the safety controller is in the on state and the heating controller is in the off state, the controller may be configured to change the safety controller to the off state.

In one or more embodiments, when both the heating switch and the safety switch are opened while the safety controller is in the on state and both the heating switch and the safety switch are closed, the controller may be configured to maintain the safety controller in the on state until a predetermined third waiting time elapses.

In one or more embodiments, when the heating controller is changed to the on state before the third waiting time elapses, the controller may be configured to control the heater to be activated.

In one or more embodiments, when the heating controller is not changed to the on state until the third waiting time elapses, the controller may be configured to change the safety controller to the off state.

In one or more embodiments, the cooking appliance may further include an operation indicator lamp indicating an operating state of the heater, an operating state of the heating controller, or an open or closed state of the safety switch.

In one or more embodiments, the cooking appliance may further include a safety controller status display area configured to display a status of the safety controller.

In one or more embodiments, the safety controller status display area may be turned on while the safety controller is in an on state and may be turned off while the safety controller is in an off state.

A seventh aspect of the disclosure provides a cooking appliance including a heater, a heating controller configured to control operation of the heater, a safety controller, a heating switch connected between an external power source and the heater, a safety switch connected between the external power source and the heater, and a controller configured to control an open or closed state of the safety switch according to operation of the heating controller or an operation of the safety controller.

In one or more embodiments, when both the heating switch and the safety switch are opened in a state in which the safety controller is in an on state and both the heating switch and the safety switch are closed, the controller may be configured to maintain the safety switch in an on state until a predetermined third waiting time elapses.

In one or more embodiments, when the heating controller is changed to an on state before the third waiting time elapses, the heating switch and the safety switch may be closed.

In one or more embodiments, when the heating controller is not changed to an on state until the third waiting time elapses, the controller may be configured to change the safety controller to an off state.

In one or more embodiments, when the heating controller is changed to an on state while the safety controller is in an on state and the heating controller is in an off state, the controller may be configured to control the safety switch to be closed.

In one or more embodiments, when the heating controller is not changed to an on state during a predetermined second waiting time while the safety controller is in an on state and the heating controller is in an off state, the controller may be configured to change the safety controller to an off state.

In one or more embodiments, when the heating controller is in an on state when the safety controller is changed from an off state to an on state, the controller may be configured to maintain the safety controller in an on state during a predetermined first waiting time.

In one or more embodiments, when the heating controller is not changed to an off state for the first waiting time, the controller may be configured to change the safety controller to an off state.

In one or more embodiments, when the heating controller is in an on state when the safety controller has been changed from an off state to an on state, the controller may be configured to change the safety controller to an off state.

In one or more embodiments, when the heating controller is changed to an on state, the heating switch may be closed.

In one or more embodiments, the cooking appliance may further include an operation indicator lamp indicating an operation state of the heater, an operation state of the heating controller, or an open or closed state of the safety switch.

In one or more embodiments, the cooking appliance may further include a safety controller status display area configured to display a status of the safety controller.

In one or more embodiments, the safety controller status display area may be turned on while the safety controller is in an on state and may be turned off while the safety controller is in an off state.

A eighth aspect of the disclosure provides a cooking appliance which may include a heater, a heating controller configured to control operation of the heater, a safety controller, and a controller configured to control operation of the heater according to operation of the heating controller or operation of the safety controller.

In one or more embodiments, when the heating controller is changed to the off state when the heater is working, the controller may be configured to maintain the safety controller in the on state until a predetermined third waiting time elapses.

In one or more embodiments, the heater may be activated when the heating controller is changed to an on state before the third waiting time elapses.

In one or more embodiments, when the heating controller is not changed to an on state until the third waiting time elapses, the controller may be configured to change the safety controller to an off state.

In one or more embodiments, when the heating controller is changed to the on state while the safety controller is in the on state and the heating controller is in the off state, the controller may be configured to control the heater to be activated.

In one or more embodiments, when the heating controller is not changed to an on state during a predetermined second waiting time while the safety controller is in an on state and the heating controller is in an off state, the controller may be configured to change the safety controller to an off state.

In one or more embodiments, when the heating controller is in an on state when the safety controller is changed from an off state to an on state, the controller may be configured to maintain the safety controller in an on state during a predetermined first waiting time.

In one or more embodiments, when the heating controller is not changed to an off state for the first waiting time, the controller may be configured to change the safety controller to an off state.

In one or more embodiments, when the heating controller is in an on state when the safety controller is changed from an off state to an on state, the controller may be configured to change the safety controller to an off state.

In one or more embodiments, the cooking appliance may further include an operation indicator lamp indicating an operation state of the heater, an operation state of the heating controller, or an open or closed state of the safety switch.

In one or more embodiments, the cooking appliance may further include a safety controller status display area configured to display a status of the safety controller.

In one or more embodiments, the safety controller status display area may be turned on while the safety controller is in an on state and may be turned off while the safety controller is in an off state.

A ninth aspect of the disclosure provides a cooking appliance which may include a heater, a heating controller configured to control operation of the heater, a safety controller, a heating switch connected between an external power source and the heater, a safety switch connected between the external power source and the heater, and a controller configured to control an open or closed state of the safety switch according to operation of the heating controller or an operation of the safety controller.

In one or more embodiments, when the heating controller is changed to the on state when the safety option is in the on state, the safety controller is in the on state, and the heating controller is in the off state, the controller may be configured to control the safety switch to be closed.

In one or more embodiments, when the heating controller is not changed to an on state during a predetermined first waiting time while the safety controller is in an on state and the heating controller is in an off state, the controller may be configured to change the safety controller to an off state.

In one or more embodiments, when the heating controller is not changed to an on state during a predetermined first waiting time while the safety controller is in an on state and the heating controller is in an off state, the controller may be configured to perform a first warning operation during a predetermined second waiting time.

In one or more embodiments, when the heating controller is changed to an on state before the second waiting time elapses, the controller may be configured to control the safety switch to be closed.

In one or more embodiments, when the heating controller is not changed to the on state until the second waiting time elapses or when operation other than operation of the heating controller occurs before the second waiting time elapses, the controller may be configured to terminate the first warning operation.

In one or more embodiments, while the first warning operation is performed, a first warning message may be output from at least one of a display, a speaker, and an operation indicator lamp.

In one or more embodiments, when the heating controller is not changed to an on state until the second waiting time elapses, the controller may be configured to change the safety controller to an off state.

**In** one or more embodiments, when the heating controller is in an on state when the safety controller is changed from an off state to an on state, the controller may be configured to change the safety controller to an off state.

**In** one or more embodiments, when the heating controller is in an on state while all heaters are not being driven and the safety controller is in an off state, the controller may be configured to perform a second warning operation.

**In** one or more embodiments, when the heating controller is changed to an on state, the heating switch may be closed.

**In** one or more embodiments, the cooking appliance may further include an operation indicator lamp indicating an operation state of the heater, an operation state of the heating controller, or an open/close state of the safety switch.

In one or more embodiments, one or a first end of the operation indicator lamp may be connected to the other or a second end of the heating switch, and the other or a second end of the operation indicator lamp may be connected to one or a first end of the safety switch.

In one or more embodiments, one or a first end of the operation indicator lamp may be connected to one or a first end of the heating switch, and the other or a second end of the operation indicator lamp may be connected to the other or a second end of the safety switch.

In one or more embodiments, the cooking appliance may further include a heating level adjustment switch opened and closed according to operation of the heating controller and configured to control the heating level of the heater.

In one or more embodiments, one or a first end of the heating level adjusting switch may be connected to the other or a second end of the safety switch, and the other or a second end of the heating level adjusting switch may be connected to the heater.

In one or more embodiments, the controller may be configured to change an on state and off state of the heating switch according to a heating level of the heater.

In one or more embodiments, the cooking appliance may further include a safety controller status display area configured to display the state of the safety controller.

In one or more embodiments, the safety controller status display area may be turned on while the safety controller is in an on state and may be turned off while the safety controller is in an off state.

In one or more embodiments, when the heating controller is changed from an off state to an on state while the safety option is in an off state, the heating switch and the safety switch may be closed.

A tenth aspect of the disclosure provides a cooking appliance which may include a heater, a heating controller configured to control operation of the heater, a safety controller, a heating switch connected between an external power source and the heater, a safety switch connected between the external power source and the heater, and a controller configured to control an opening or closing state of the heating switch or the safety switch according to operation of the heating controller or operation of the safety controller.

In one or more embodiments, when the heating controller is not changed to an on state during a predetermined first waiting time while the safety controller is in an on state and the heating controller is in an off state, the controller may be configured to change the safety controller to an off state.

In one or more embodiments, when the heating controller is changed to the on state when the safety option is in the on state, the safety controller is in the on state, and the heating controller is in the off state, the controller may be configured to control the safety switch to be closed.

In one or more embodiments, when the heating controller is not changed to an on state during a predetermined first waiting time while the safety controller is in an on state and the heating controller is in an off state, the controller may be configured to perform a first warning operation during a predetermined second waiting time.

In one or more embodiments, when the heating controller is changed to an on state before the second waiting time elapses, the controller may be configured to control the safety switch to be closed.

In one or more embodiments, when the heating controller is not changed to the on state until the second waiting time elapses or that another operation other than operation of the heating controller occurs before the second waiting time elapses, the controller may be configured to terminate the first warning operation.

In one or more embodiments, while the first warning operation is performed, the first warning message may be output from at least one of a display, a speaker, and an operation indicator lamp.

In one or more embodiments, when the heating controller is not changed to an on state until the second waiting time elapses, the controller may be configured to change the safety controller to an off state.

In one or more embodiments, when the heating controller is in an on state when the safety controller is changed from an off state to an on state, the controller may be configured to change the safety controller to an off state.

In one or more embodiments, when the heating controller is in an on state while all heaters are not being driven and the safety controller is in an off state, the controller may be configured to perform a second warning operation.

In one or more embodiments, when the heating controller is changed to an on state, the heating switch may be closed.

In one or more embodiments, the cooking appliance may further include an operation indicator lamp indicating an operation state of the heater, an operation state of the heating controller, or an open/close state of the safety switch.

In one or more embodiments, one or a first end of the operation indicator lamp may be connected to the other or a second end of the heating switch, and the other or a second end of the operation indicator lamp may be connected to one or a first end of the safety switch.

In one or more embodiments, one or a first end of the operation indicator lamp may be connected to one or a first end of the heating switch, and the other or a second end of the operation indicator lamp may be connected to the other or a second end of the safety switch.

In one or more embodiments, the cooking appliance may further include a heating level adjusting switch configured to be opened and closed according to operation of the heating controller and to adjust the heating level of the heater.

In one or more embodiments, one or a first end of the heating level adjusting switch may be connected to the other or a second end of the safety switch, and the other or a second end of the heating level adjusting switch may be connected to the heater.

In one or more embodiments, the controller may be configured to change an on state and off state of the heating switch according to a heating level of the heater.

In accordance with some embodiments of the tenth aspect, the cooking appliance may further include a safety controller status display area configured to display a status of the safety controller.

In one or more embodiments, the safety controller status display area may be turned on while the safety controller is in an on state and may be turned off while the safety controller is in an off state.

In one or more embodiments, when the heating controller is changed from an off state to an on state while the safety option is in an off state, the heating switch and the safety switch may be closed.

An eleventh aspect of the disclosure provides a cooking appliance which may include a heater, a heating controller configured to control operation of the heater, a safety controller, and a controller configured to control operation of the heater according to operation of the heating controller or an operation of the safety controller.

In one or more embodiments, when the heating controller is changed to the on state when the safety option is in the on state, the safety controller is in the on state, and the heating controller is in the off state, the controller may be configured to control the heater to be activated.

In one or more embodiments, when the heating controller is not changed to an on state during a predetermined first waiting time while the safety controller is in an on state and the heating controller is in an off state, the controller may be configured to change the safety controller to an off state.

In one or more embodiments, when the heating controller is not changed to an on state during a predetermined first waiting time when the safety controller is changed from an off state to an on state and the heating controller is in an off state, the controller may be configured to perform a first warning operation during a predetermined second waiting time.

In one or more embodiments, when the heating controller is changed to an on state before the second waiting time elapses, the controller may be configured to control the heater to be activated.

In one or more embodiments, when the heating controller is not changed to the on state until the second waiting time elapses or that another operation other than operation of the heating controller occurs before the second waiting time elapses, the controller may be configured to terminate the first warning operation.

In one or more embodiments, while the first warning operation is performed, the first warning message may be output from at least one of a display, a speaker, and an operation indicator lamp.

In one or more embodiments, when the heating controller is not changed to an on state until the second waiting time elapses, the controller may be configured to change the safety controller to an off state.

In one or more embodiments, when the heating controller is in an on state when the safety controller is changed from an off state to an on state, the controller may be configured to change the safety controller to an off state.

In one or more embodiments, when the heating controller is in an on state while all heaters are not being driven and the safety controller is in an off state, the controller may be configured to perform a second warning operation.

In one or more embodiments, the cooking appliance may further include an operation indicator lamp indicating an operation state of the heater, an operation state of the heating controller, or an open/close state of the safety switch.

In one or more embodiments, the cooking appliance may further include a safety controller status display area configured to display a status of the safety controller.

In one or more embodiments, the safety controller status display area may be turned on while the safety controller is in an on state and may be turned off while the safety controller is in an off state.

A twelfth aspect of the disclosure provides a cooking appliance which may include a heater, a heating controller configured to control operation of the heater, a safety controller, and a controller configured to control operation of the heater according to operation of the heating controller or an operation of the safety controller.

In one or more embodiments, when the heating controller is not changed to an on state during a predetermined first waiting time while the safety controller is in an on state and the heating controller is in an off state, the controller may be configured to change the safety controller to an off state.

In one or more embodiments, when the heating controller is changed to the on state when the safety option is in the on state, the safety controller is in the on state, and the heating controller is in the off state, the controller may be configured to control the heater to be activated.

In one or more embodiments, when the heating controller is not changed to an on state during a predetermined first waiting time when the safety controller is changed from an off state to an on state and the heating controller is in an off state, the controller may be configured to perform a first warning operation during a predetermined second waiting time.

In accordance with some embodiments of the twelfth aspect, when the heating controller is changed to an on state before the second waiting time elapses, the controller may be configured to control the heater to be activated.

In one or more embodiments, when the heating controller is not changed to the on state until the second waiting time elapses or that another operation other than operation of the heating controller occurs before the second waiting time elapses, the controller may be configured to terminate the first warning operation.

In one or more embodiments, while the first warning operation is performed, the first warning message may be output from at least one of a display, a speaker, and an operation indicator lamp.

In one or more embodiments, when the heating controller is not changed to an on state until the second waiting time elapses, the controller may be configured to change the safety controller to an off state.

In one or more embodiments, when the heating controller is in an on state when the safety controller is changed from an off state to an on state, the controller may be configured to change the safety controller to an off state.

In one or more embodiments, when the heating controller is in an on state while all heaters are not being driven and the safety controller is in an off state, the controller may be configured to perform a second warning operation.

In one or more embodiments, the cooking appliance may further include an operation indicator lamp indicating an operation state of the heater, an operation state of the heating controller, or an open/close state of the safety switch.

In one or more embodiments, the cooking appliance may further include a safety controller status display area configured to display a status of the safety controller.

In one or more embodiments, the safety controller status display area may be turned on while the safety controller is in an on state and may be turned off while the safety controller is in an off state.

The cooking appliance of the one or more embodiments may prevent the heater from working due to the operation not intended by the user.

### BRIEF DESCRIPTION OF DRAWINGS

Fig.1 is a front view of a cooking appliance according to an embodiment.
Fig.2 illustrates a cooktop and a control panel of the cooking appliance illustrated in Fig. 1.
Fig.3 illustrates a portion of the control panel illustrated in Fig. 2.
Fig.4 is a schematic diagram of a cooking appliance of an embodiment.
Fig.5 a schematic diagram of a cooking appliance of another embodiment.
Fig.6 flowchart of a method for controlling a cooking appliance of an embodiment.
Fig.7 flowchart of a method for controlling a cooking appliance of another embodiment.
Fig.8 flowchart of a method for controlling a cooking appliance of still another embodiment.
Figs. 9 to 11 are diagrams of an example process in which a user sets a safety option of a cooking appliance according to an embodiment.
Figs. 12 to 14 are diagrams of an embodiment in which a user operates a control panel of a cooking appliance.

### DETAILED DESCRIPTIONS

Advantages and features of the disclosure, and a method of achieving the advantages and features will become apparent with reference to embodiments described hereinafter in detail together with the accompanying drawings. However, the disclosure is not limited to the embodiments as disclosed under, but may be implemented in various different forms. Thus, these embodiments are set forth only to make the disclosure complete, and to entirely inform the scope of the disclosure to those of ordinary skill in the technical field to which the disclosure belongs, and the disclosure is only defined by the scope of the claims. For simplicity and clarity of illustration, elements in the drawings are not necessarily drawn to scale. The same reference numbers in different drawings represent the same or similar elements, and as such perform similar functionality.

Further, descriptions and details of well-known operations and elements are omitted for simplicity of the description. Furthermore, in the following detailed description of the disclosure, numerous specific details are set forth in order to provide a thorough understanding of the disclosure. However, it will be understood that the disclosure may be practiced without these specific details. In other instances, well-known methods, procedures, components, and circuits have not been described in detail so as not to unnecessarily obscure aspects of the disclosure. Examples of various embodiments are illustrated and described further below. It will be understood that the description herein is not intended to limit the claims to the specific embodiments described. On the contrary, it is intended to cover alternatives, modifications, and equivalents as may be included within the scope of the disclosure as defined by the appended claims. A shape, a size, a ratio, an angle, a number, etc. disclosed in the drawings for illustrating embodiments of the disclosure are illustrative, and the disclosure is not limited thereto. The terminology used herein is directed to the purpose of describing particular embodiments only and is not intended to be limiting of the disclosure.

As used herein, the singular constitutes "a" and "an" are intended to include the plural constitutes as well, unless the context clearly indicates otherwise. It will be further understood that the terms "comprise", "comprising", "include", and "including" when used Herein, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of associated listed items. Expression such as "at least one of" when preceding a list of elements may modify an entirety of the list of elements and may not modify the individual elements of the list. In interpretation of numerical values, an error or tolerance therein may occur even when there is no explicit description thereof.

It will also be understood that when a first element or layer is referred to as being present "on" a second element or layer, the first element may be disposed directly on the second element or may be disposed indirectly on the second element with a third element or layer being disposed between the first and second elements or layers. It will be understood that when a first element or layer is referred to as being "connected to", or "coupled to" a second element or layer, the first element may be directly connected to or coupled to the second element or layer, or one or more intervening elements or layers may be present therebetween. It will also be understood that when an element or layer is referred to as being "between" two elements or layers, it may be the only element or layer between the two elements or layers, or one or more intervening elements or layers may also be present therebetween.

Further, as used herein, when a layer, film, area, plate, or the like is disposed "on" or "on a top" of another layer, film, area, plate, or the like, the former may directly contact the latter or still another layer, film, area, plate, or the like may be disposed between the former and the latter. As used herein, when a layer, film, area, plate, or the like is directly disposed "on" or "on a top" of another layer, film, area, plate, or the like, the former directly contacts the latter and still another layer, film, area, plate, or the like is not disposed between the former and the latter. Further, as used herein, when a layer, film, area, plate, or the like is disposed "below" or "under" another layer, film, area, plate, or the like, the former may directly contact the latter or still another layer, film, area, plate, or the like may be disposed between the former and the latter. As used herein, when a layer, film, area, plate, or the like is directly disposed "below" or "under" another layer, film, area, plate, or the like, the former directly contacts the latter and still another layer, film, area, plate, or the like is not disposed between the former and the latter.

In descriptions of temporal relationships, for example, temporal precedent relationships between two events such as "after", "subsequent to", "before", etc., another event may occur therebetween unless "directly after", "directly subsequent" or "directly before" is not indicated. When a certain embodiment may be implemented differently, a function or an operation specified in a specific block may occur in a different order from an order specified in a flowchart. For example, two blocks in succession may be actually performed substantially concurrently, or the two blocks may be performed in a reverse order depending on a function or operation involved.

It will be understood that, although the terms "first", "second", "third", and so on may be used herein to describe various elements, components, areas, layers and/or periods, these elements, components, areas, layers and/or periods should not be limited by these terms. These terms are used to distinguish one element, component, area, layer or section from another element, component, area, layer or section. Thus, a first element, component, area, layer or section as described under could be termed a second element, component, area, layer or section, without departing from the spirit and scope of the disclosure.

When an embodiment may be implemented differently, functions or operations specified within a specific block may be performed in a different order from an order specified in a flowchart. For example, two consecutive blocks may actually be performed substantially simultaneously, or the blocks may be performed in a reverse order depending on related functions or operations.

The features of the various embodiments of the disclosure may be partially or entirely combined with each other, and may be technically associated with each other or operate with each other. The embodiments may be implemented independently of each other and may be implemented together in an association relationship. In interpreting a numerical value, the value is interpreted as including an error range unless there is no separate explicit description thereof. Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In a state in which the cooking appliance is placed on the floor, a side at which the door is installed around a center of the cooking appliance is defined as a front side. Therefore, when the door is opened, the cooking target enters the cavity of the cooking appliance in a rear direction. For convenience, a frontward-rearward direction may be referred to as a first direction. **In** this regard, the front side may be referred to as one or a first side in the first direction, and the rear side may be referred to as the other or a second side in the first direction.

The direction of gravity may be defined as a downward direction and the direction opposite to the direction of gravity may be defined as an upward direction.

A horizontal direction orthogonal to the frontward-rearward direction of the cooking appliance, that is, a widthwise direction of the cooking appliance in a front view of the door of the cooking appliance may be referred to as a left-right or lateral direction. For convenience, the left-right direction may be referred to as a second direction. Then, the right side may be referred to as one or a first side in the second direction, and the left side may be referred to as the other or a second side in the second direction.

The widthwise direction of the cooking appliance may be referred to as a lateral direction. Then, the right side may be referred to as one or a first side in the lateral direction, and the left side may be referred to as the other or a second side in the lateral direction.

The above-described vertical direction may be referred to as a third direction. Then, the upper side may be referred to as one side in the third direction, and the lower side may be referred to as the other side in the third direction.

The frontward-rearward direction and the left-right or lateral direction, that is, the first direction and the second direction may be first and second horizontal directions.

In description of flow of a signal, for example, when a signal is delivered from a node A to a node B, this may include a case where the signal is transferred from the node A to the node B via another node unless a phrase 'immediately transferred' or 'directly transferred' is used. Throughout the disclosure, "A and/or B" means A, B, or A and B, unless otherwise specified, and "C to D" means C inclusive to D inclusive unless otherwise specified.

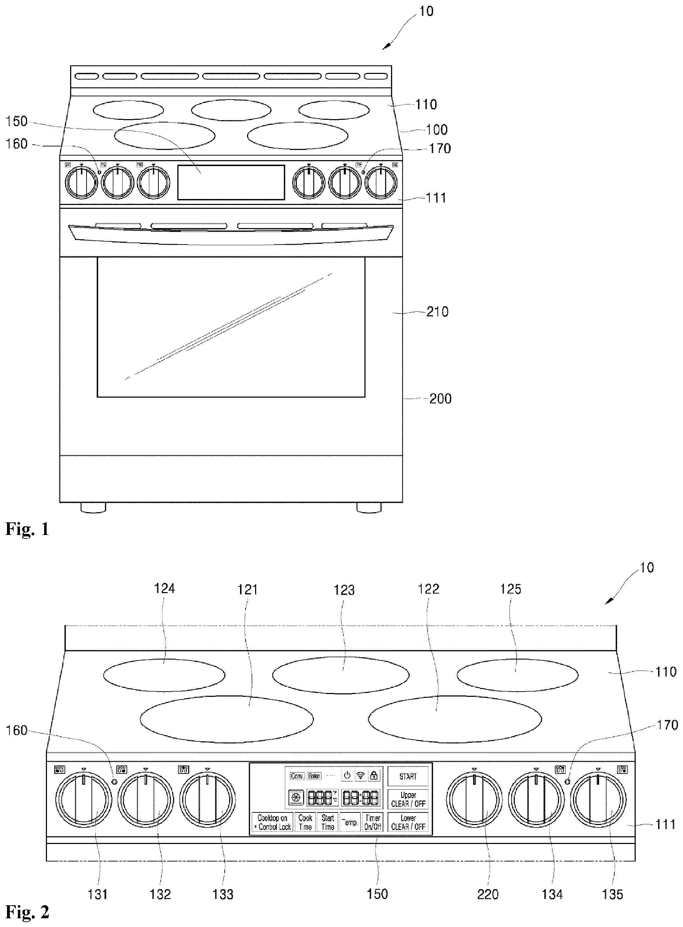

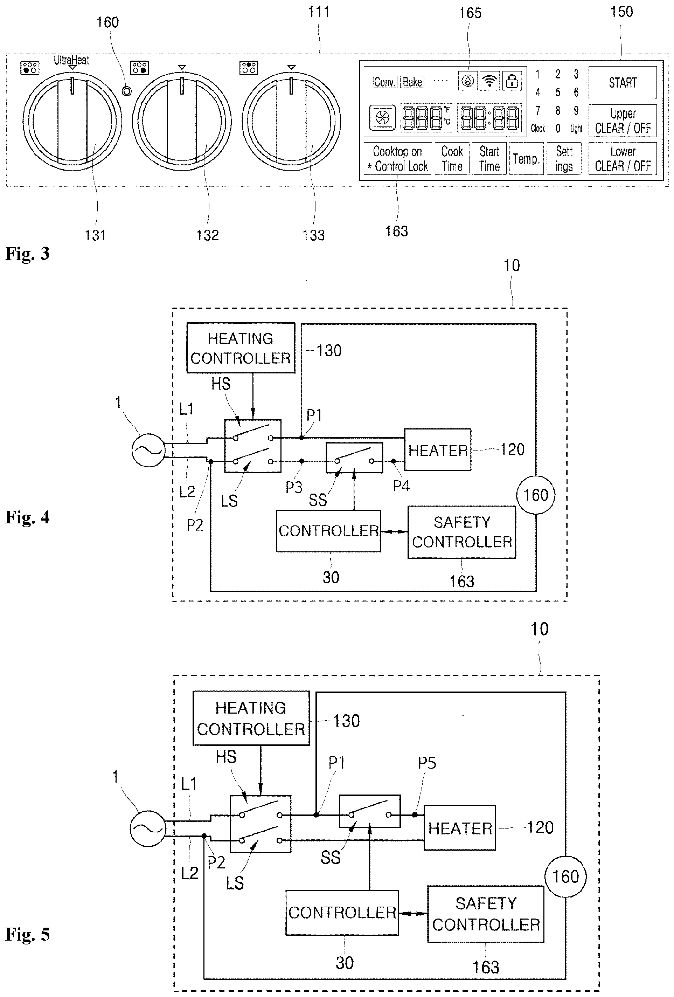

Fig. 1 is a front view of a cooking appliance of an embodiment. Fig. 2 illustrates a cooktop and a control panel of the cooking appliance of Fig. 1. Fig. 3 illustrates a portion of the control panel of Fig. 2.

Referring to Figs. 1 to 3, a cooking appliance 10 of an embodiment may include a cooktop 100 and an oven 200. However, the operation of and control method for the cooking appliance described hereinafter is not necessarily applied only to the cooking appliance 10 including the cooktop 100 and the oven 200. For example, the operation and control method for the cooking appliance described hereinafter may also be applied to a cooking appliance including only the cooktop 100 or a cooking appliance including only the oven 200.

The cooktop 100 may be disposed on top of the oven 200. The cooktop 100 may include an upper plate 110 forming an outer appearance of an upper surface of the cooking appliance 10. A container containing food may be seated on the upper plate 110.

The upper plate 110 may include one or more heating areas 121 to 125. Figs. 1 and 2 illustrate an embodiment in which the upper plate 110 includes five heating areas 121 to 125. However, this is only one example, and the number of heating areas formed in the upper plate 110 may vary according to embodiments.

A heater for heating the container placed on the heating areas 121 to 125 may be disposed under each of the heating areas 121 to 125. In an embodiment, when the cooktop 100 is an induction heating device, the heater may include a heating coil that is activated by an alternating current to heat the container. In another embodiment, when the cooktop 100 is a radiant type heating device, the heater may include a planar heating element or a radiant burner that heats the container with radiant heat. In still another embodiment, the heater may include a hot wire coil or a hot plate that is autonomously heated using electric energy. In still yet another embodiment, the heater may include a gas burner that burns gas to heat the container. However, the type of heater is not limited thereto, and the cooktop 100 may include a different type of heater therefrom.

The oven 200 may be disposed by cooktop 100. A cooking chamber for heating food or a container containing food may be defined inside of the oven 200. A heater for heating food or a container containing food may be disposed inside of the cooking chamber. Examples of the heater may include a heating coil, a planar heating element, a radiant burner, a hot wire coil, a hot plate, a gas burner, or a convection heater, for example. However, the type of heater is not limited thereto.

A door 210 that opens and closes the cooking chamber may be disposed at a front surface of the oven 200. An upper end of the door 210 may pivot around a lower end of the oven 200 or may pivot back and forth around a left or right or lateral side of the oven 200. A handle that opens and closes the door 210 may be mounted on one side of the door 210.

In an embodiment, the cooking appliance 10 may include a control panel 111. For example, as illustrated in Fig. 1, the control panel 111 may be disposed between the cooktop 100 and the oven 200 and faces in the frontward direction of the cooking appliance 10. However, the arrangement position of the control panel 111 is not limited thereto.

In an embodiment, the control panel 111 may include one or more heating controllers 131 to 135 and 220 configured to control the operation of the cooking appliance 10. Each of the heating controllers 131 to 135 and 220 may correspond to each of the heating areas 121 to 125 in a 1:1 manner. For example, the control panel 111 may include first to fifth heating controllers 131 to 135 configured to control the operations of the first to fifth heating areas 121 to 125, respectively, and a sixth heating controller 220 configured to control the operation of the oven 200. The control panel 111 illustrated in Figs. 1 to 3 is merely an example, and the number and arrangement positions of the heating controllers included in the control panel 111 may vary according to embodiments.

In an embodiment, each of the heating controllers 131 to 135 and 220 may be embodied as a rotatable knob. For example, the knob may be a push and turn type knob operating in a push manner and a rotation manner. In another example, the knob may be embodied as a rotary knob operating only in a rotation manner without a push manner. The user may rotate the knob to operate the heater disposed in each of the heating zones 121 to 125 or the oven 200, adjust the heating level or temperature of the heater, or stop the operation of the heater.

When the heating controllers 131 to 135 and 220 are embodied as knobs, a state in which each of the knobs is maintained at the initial position may be defined as a state in which each of the heating controllers 131 to 135 and 220 is in an off state. A state in which the knob is rotated to a position other than the initial position may be defined as a state in which each of the heating controllers 131 to 135 and 220 is in an on state. However, the types of the heating controllers 131 to 135 and 220 are not limited thereto, and each of the heating controllers 131 to 135 and 220 may be embodied as a different type of device therefrom.

In an embodiment, the control panel 111 may include a display panel 150. The display panel 150 may display information related to the operation of the cooking appliance 10. The display panel 150 may include one or more controllers configured to control the operation of the cooking appliance 10. For example, in the display panel 150, one or more controllers configured to control the operation of the cooking appliance 10 may be embodied as physical buttons, or buttons capable of touch operation. At least a portion of the display panel 150 may be embodied as a touch panel.

In an embodiment, the display panel 150 may include a safety controller 163. The user may change the operation state of the safety controller 163 to an on state or an off state by pressing or touching the safety controller 163. The display panel 150 may include a safety controller status display area 165 configured to display an on state and off state of the safety controller 163.

For example, when the safety controller 163 is in the off state, the safety controller status display area 165 may be kept turned off. While the safety controller 163 is in the off state, when the user presses or touches the safety controller 163, the safety controller 163 may be changed to the on state. When the safety controller 163 is changed to the on state, the safety controller status display area 165 may be kept turned on.

The controller 30 may turn off the safety controller status display area 165 even when the safety controller 163 is in the on state, and may turn on the safety controller status display area 165 when a predetermined condition is satisfied.

When the safety controller 163 is in the off state, a safety function to be described hereinafter may be deactivated. When the safety controller 163 is in the on state, a safety function to be described hereinafter may be activated.

As illustrated in Fig. 3, the safety controller 163 may have two functions. For example, when the user presses or touches the safety controller 163 for a short time (for example, less than 5 seconds), the user may control a safety function to be described hereinafter using the safety controller 163. When the user presses or touches the safety controller 163 for a long time (for example, 5 seconds or longer), the user may control an existing locking function using the safety controller 163. However, in another embodiment, the safety controller 163 may be implemented to control only a safety function to be described hereinafter.

In another embodiment, the safety controller 163 may be disposed at a position other than a position on the display panel 150.

The control panel 111 may include an operation indicator lamp 160. The operation indicator lamp 160 may indicate an operation state of the heater, an operation state of the heating controllers 131 to 135 and 220, or an open or closed state of a safety switch to be described hereinafter. For example, when power is supplied to one of a plurality of heaters included in the cooking appliance 10 so that the heater may be activated, the operation indicator lamp 160 may be turned on. When all the heaters do not work, the operation indicator lamp 160 may be turned off. In another example, the operation indicator lamp 160 may be turned on when the heating controllers 131 to 135 and 220 are changed from the off state to the on state, and may be turned off when the heating controllers 131 to 135 and 220 are changed from the on state to the off state. In another example, when the safety switch to be described hereinafter is closed, the operation indicator lamp 160 may be turned on. When the safety switch is opened, the operation indicator lamp 160 may be turned off.

The control panel 111 may include a temperature display lamp 170. The temperature display lamp 170 may indicate a temperature of a heater included in the cooking appliance 10. For example, when the temperature of one of the plurality of heaters included in the cooking appliance 10 is equal to or greater than a predetermined reference temperature, the temperature display lamp 170 may be turned on. When the temperatures of all the heaters are lower than the reference temperature, the temperature display lamp 170 may be turned off.

Fig. 4 is a schematic diagram of a cooking appliance according to still another embodiment.

Fig. 5 is a schematic diagram of a cooking appliance according to still yet another embodiment.

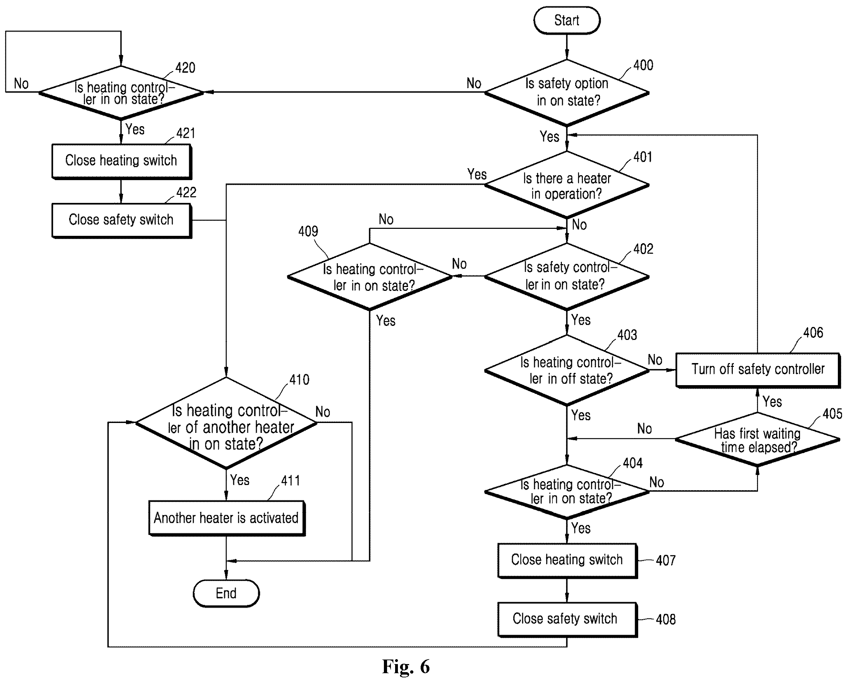

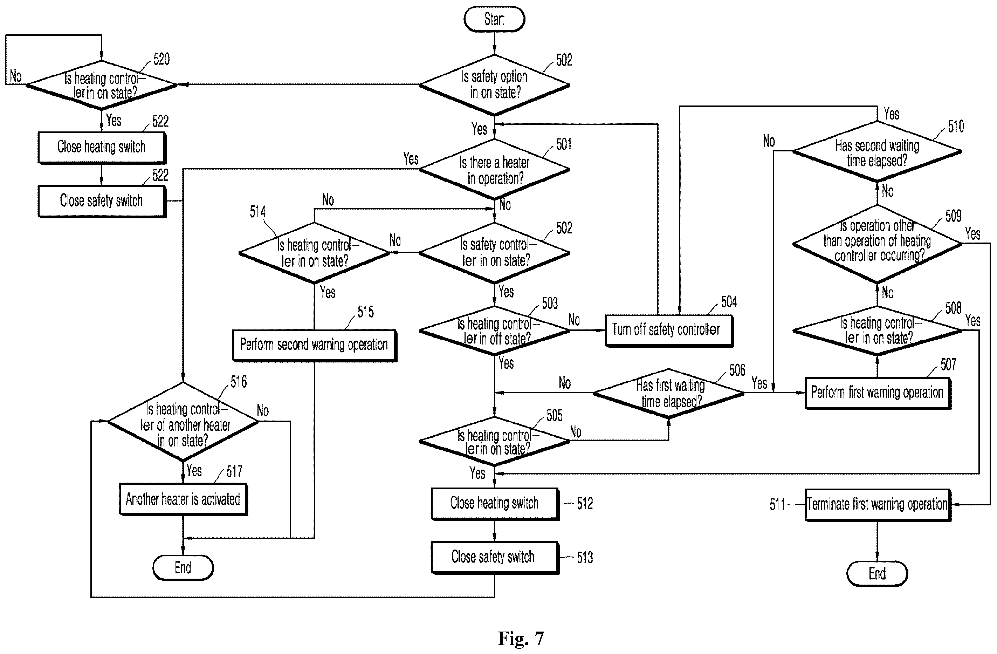

Referring to Figs. 6 and 7, the cooking appliance 10 may include the heater 120, the heating controller 130, the safety controller 163, the controller 30, the heating switch HS, and the safety switch SS.

The first power supply line L1 and the second power supply line L2 may be connected between the heater 120 and the external power source 1. The heater 120 may be activated by power supplied from the external power source 1 through the first power supply line L1 and the second power supply line L2. The external power source 1 may be, for example, a single-phase four-wire AC power source. However, the type of the external power source 1 is not limited thereto.

For example, the heater 120 may be one of a plurality of heaters disposed by heating areas 121 to 125 of the cooking appliance 10 as described above.

In an embodiment, each of the heating switch HS, the heating level adjustment switch LS, and the safety switch SS may be disposed between the external power source 1 and the heater 120.

One or a first end of the heating switch HS may be connected to the first power supply line L1. The other or a second end of the heating switch HS may be connected to the heater 120.

One or a first end of the safety switch SS may be connected to the first power supply line L1 or the second power supply line L2. The other or a second end of the safety switch SS may be connected to the heater 120.

As illustrated in Fig. 4, in an embodiment, one or a first end of the heating switch HS may be connected to the first power supply line L1, and the other or a second end of the heating switch HS may be connected to the heater 120. One or a first end of the safety switch SS may be connected to the other or a second end of the heating level adjustment switch LS, and the other or a second end of the safety switch SS may be connected to the heater 120. That is, the safety switch SS may be connected between the heating level adjustment switch LS and the heater 120.

As illustrated in Fig. 5, in another embodiment, one or a first end of the heating switch HS may be connected to the first power supply line L1, and the other or a second end of the heating switch HS may be connected to one or a first end of the safety switch SS. One or a first end of the safety switch SS may be connected to the other or a second end of the heating switch HS, and the other or a second end of the safety switch SS may be connected to the heater 120. That is, the safety switch SS may be connected between the heating switch HS and the heater 120.

The opening and closing states of the heating switch HS and the heating level adjustment switch LS may be adjusted by the heating controller 130. That is, the operation of the heater 120 may be controlled by the heating controller 130. For example, when the user changes the heating controller 130 from the off state to the on state, the heating switch HS may be closed. When the user changes the heating controller 130 from the on state to the off state, the heating switch HS may be opened. When the user sets the heating level of the heater 120 using the heating controller 130, the heating level adjustment switch LS may be repeatedly opened and closed according to the heating level set by the user. The opening/closing time, the opening/closing interval, and the number of opening/closing times of the heating level adjustment switch LS may be set differently based on the heating level.

For example, the heating controller 130 may be one of the above-described heating controllers 131 to 135 and 220.

The safety function of the cooking appliance 10 may be activated or deactivated by the safety controller 163. For example, the user may change the safety controller 163 from an off state to an on state in order to activate the safety function. Conversely, the user may change the safety controller 163 from the on state to the off state in order to deactivate the safety function. Depending on the embodiment, the safety controller 163 may be changed from the on state to the off state by the controller 30.

The controller 30 may be configured to control the open or closed state of the safety switch SS according to operation of the safety controller 163. For example, when the safety controller 163 is changed from the off state to the on state, the controller 30 may be configured to control the safety switch SS to be closed. Conversely, when the safety controller 163 is changed from the on state to the off state, the controller 30 may be configured to control the safety switch SS to be opened.

As will be described hereinafter, even when the safety controller 163 is changed from the off state to the on state, the controller 30 may be configured to control the safety switch SS to be closed only when a specific condition is satisfied. When the specific condition is satisfied while the safety controller 163 is in the on state, the controller 30 may be configured to control the safety switch SS to be opened.

As used herein, the state in which the safety switch SS is closed may be referred to as a state in which the safety function is activated. The state in which the safety switch SS is opened may be referred to as a state in which the safety function is deactivated.

After the safety function is activated, that is, in a state in which the safety switch SS is closed, the user may control the operation of the heater 120 through the heating controller 130. When the safety function is deactivated, that is, when the safety switch SS is opened, the heater 120 does not work even when the user operates the heating controller 130.

For example, the controller 30 may be embodied as one of a central processing unit (CPU), a micro-controller, an application processor (AP), a communication processor (CP), an ARM processor, and a microcomputer.

In an embodiment, the cooking appliance 10 may further include the operation indicator lamp 160.

The operation indicator lamp 160 may indicate an operation state of the heater 120, an operation state of the heating controller 130, or an open or closed state of the safety switch SS.

For example, as illustrated in Fig. 4, one or a first end of the operation indicator lamp 160 may be connected to the other or a second end P1 of the heating switch HS, and the other or a second end of the operation indicator lamp 160 may be connected to one or a first end P2 of the heating level adjustment switch LS. In another example, as illustrated in Fig. 5, one or a first end of the operation indicator lamp 160 may be connected to the other or a second end P1 of the heating switch HS, and the other or a second end of the operation indicator lamp 160 may be connected to one or a first end P2 of the heating level adjustment switch LS. In this case, the operation indicator lamp 160 may be turned on or off according to the open or closed state of the heating switch HS. As a result, the operation indicator lamp 160 may indicate the operation state of the heater 120. Since the heating switch HS may be opened and closed by the heating controller 130, the operation indicator lamp 160 may indicate an operation state of the heating controller 130, that is, an on state and off state of the heating controller 130.

In another embodiment, as illustrated in Fig. 4, one or a first end of the operation indicator lamp 160 may be connected to one or a first end P3 of the safety switch SS, and the other or a second end of the operation indicator lamp 160 may be connected to the other or a second end P4 of the safety switch SS. In still another embodiment, as illustrated in Fig. 5, one or a first end of the operation indicator lamp 160 may be connected to the other or a second end P5 of the safety switch SS, and the other or a second end of the operation indicator lamp 160 may be connected to one or a first end P2 of the heating level adjustment switch LS. In this case, the operation indicator lamp 160 may be turned on or off according to the open or closed state of the safety switch SS. As a result, the operation indicator lamp 160 may indicate the open/close state of the safety switch SS, that is, whether the safety function is activated.

In an embodiment, the cooking appliance 10 may further include a speaker (not shown). The speaker (not shown) may output sound by control of the controller 30.

Fig. 6 is a flowchart of a method for controlling a cooking appliance of an embodiment.

When the safety controller 163 is in the off state and the safety switch SS is in the open state, the controller 30 may confirm whether the safety option is in the on state in step 400.

When it is confirmed in step 400 that the safety option is in the off state, the controller 30 may confirm whether one of all the heating controllers 130 is changed to the on state in step 420.

When it is confirmed that the heater which is changed to the on state is not present in step 420, the controller 30 may perform step 420 again.

When one of all the heating controllers 130 is changed to the on state in step 420, the heating switch HS corresponding to the heating controller having been changed to the on state may be closed in step 421. When it is confirmed in step 420 that one of all the heating controllers 130 is changed to the on state, the controller 30 may be configured to control the safety switch SS corresponding to the heating controller having been changed to the on state to be closed in step 422. Accordingly, power may be supplied to the heater 120 corresponding to the heating controller having been changed to the on state through the first power supply line L1 and the second power supply line L2. Accordingly, the heater 120 corresponding to the heating controller having been changed to the on state may be activated.

Thereafter, when the heating controller of another heater is changed to the on state in step 410, another heater may be activated by closing the heating switch corresponding to the heating controller 130 of another heater having been changed to the on state in step 411. In step 410, when the heating controller of another heater is not changed to the on state, the control may be terminated.

When it is confirmed in step 400 that a safety option is in the on state, the controller 30 may confirm whether there is a heater being currently working or activated among one or more heaters included in the cooking appliance 10 in step 401.

In another embodiment, when the cooking appliance 10 does not have the safety option setting function, steps 400, 420, 421, and 422 may be omitted. In this case, when the operation of the cooking appliance 10 is started, the controller 30 may first perform step 401 illustrated in Fig. 6.

Upon determination that there is a heater being currently working in step 401, step 410 may be performed. When the heating controller 130 corresponding to another heater other than the heater being currently working is changed to the on state in step 410, the heating switch corresponding to the heating controller 130 of another heater having been changed to the on state is closed, so that another heater may be activated in step 411. In response to that, in step 410, the heating controller of another heater is not changed to the on state, the control may be terminated.

When it is confirmed in step 401 that all heaters are not working, the controller 30 may confirm whether the safety controller 163 has been changed from the off state to the on state in step 402.

When it is confirmed that the safety controller 163 is not changed to the on state in step 402, the controller 30 may confirm whether one of all the heating controllers 130 is in the on state in step 409.

When it is confirmed in step 409 that all the heating controllers 130 are in the off state, the controller 30 may perform step 402 again.

When it is confirmed in step 409 that one of all the heating controllers 130 is in the on state, the controller 30 may terminate the control. In another embodiment, when it is confirmed in step 409 that one of all the heating controllers 130 is in the on state, the controller 30 may perform a second warning operation to be described hereinafter and then terminate the control.

When it is confirmed in step 402 that the safety controller 163 is changed to the on state, the controller 30 may confirm whether all the heating controllers 130 are in the off state in step 403. When it is confirmed in step 402 that the safety controller 163 is in the on state, the controller 30 may turn on lighting of a safety controller status display area 165.

Even when it is confirmed in step 402 that the safety controller 163 is in the on state, the controller 30 may maintain the safety switch SS in the open state.

When it is confirmed in step 403 that one of all the heating controllers 130 is in the on state, the controller 30 may be configured to change the safety controller 163 to the off state in step 406. When the safety controller 163 is changed to the off state, the controller 30 may turn off lighting of the safety controller status display area 165. After step 406 is performed, the controller 30 may perform step 401 again.

When it is confirmed that all the heating controllers 130 are in the off state in step 403, the controller 30 may confirm whether one of all the heating controllers 130 is changed to the on state in step 404.

When it is confirmed that the heating controller 130 is not changed to the on state in step 404, the controller 30 may confirm whether a first waiting time elapses in step 405. The first waiting time may be set differently according to embodiments.

When it is confirmed in step 405 that the first waiting time has not elapsed, the controller 30 may perform step 404 again.

When it is confirmed in step 405 that the first waiting time elapses, the controller 30 may be configured to change the safety controller 163 to an off state in step 406. When the safety controller 163 is changed to the off state, the controller 30 may turn off lighting of the safety controller status display area 165. After step 406 is performed, the controller 30 may perform step 401 again.

Under steps 402 to 406, when the heating controller 130 is not operated within a predetermined time (first waiting time) after the safety controller 163 has been changed from the off state to the on state, the safety controller 163 is automatically changed to the off state. According to this control, even when the safety controller 163 is changed to the on state, the heating controller 130 is not operated within the predetermined time, such that the safety controller 163 returns to the off state again, thereby maintaining the cooking appliance 10 in a safer state.

When one of all the heating controllers 130 is changed to the on state in step 404, the heating switch HS may be closed in step 407. When it is confirmed in step 404 that one of all the heating controllers 130 is changed to the on state, the controller 30 may be configured to control the safety switch SS corresponding to the heating controller having been changed to the on state to be closed in step 408. Accordingly, power may be supplied to the heater 120 corresponding to the heating controller having been changed to the on state through the first power supply line L1 and the second power supply line L2. Accordingly, the heater 120 corresponding to the heating controller having been changed to the on state may be activated.

In other words, when the heating controller 130 is changed to the on state while the safety controller 163 is in the on state and the heating controller 130 is in the off state, the controller 30 may be configured to control the safety switch SS to be closed.

According to this control, only when all the heating controllers 130 are in an off state and the user changes the safety controller 163 to an on state, the user may operate the heating controller 130 such that the heater corresponding thereto be activated.

In one embodiment, the operation indicator lamp 160 may be turned on by closing the heating switch HS in step 407. Accordingly, the user may recognize that the heater 120 is being working or recognize that the heating controller 130 is in an on state.

In another embodiment, the operation indicator lamp 160 may be turned on by closing the safety switch SS in step 408. Accordingly, the user may recognize that the safety function is in the activated state.

After the heater 120 is activated 408, step 410 may be performed. When the heating controller 130 corresponding to another heater other than the heater being currently working is changed to the on state in step 410, the heating switch corresponding to the heating controller 130 of another heater having been changed to the on state is closed, so that another heater may be activated in step 411. In step 410, when the heating controller of another heater is not changed to the on state, the control may be terminated.

Fig. 7 is a flowchart of a method for controlling a cooking appliance according to another embodiment.

When the safety controller 163 is in the off state and the safety switch SS is in the open state, the controller 30 may confirm whether the safety option is in the on state in step 500.

When it is confirmed in step 500 that the safety option is in the off state, the controller 30 may confirm whether one of all the heating controllers 130 is changed to the on state in step 520.

When it is confirmed that the heating controller having been changed to the on state is not present in step 520, the controller 30 may perform step 520 again.

When one of all the heating controllers 130 is changed to the on state in step 520, the heating switch HS corresponding to the heating controller having been changed to the on state may be closed in step 521.

When it is confirmed in step 520 that one of all the heating controllers 130 is changed to the on state, the controller 30 may be configured to control the safety switch SS corresponding to the heating controller having been changed to the on state to be closed in step 522. Accordingly, power may be supplied to the heater 120 corresponding to the heating controller having been changed to the on state through the first power supply line L1 and the second power supply line L2. Accordingly, the heater 120 corresponding to the heating controller having been changed to the on state may be activated.

Thereafter, when the heating controller of another heater is changed to the on state in step 516, another heater may be activated by closing the heating switch corresponding to the heating controller 130 of another heater having been changed to the on state in step 517. In response to that, in step 516, the heating controller of another heater is not changed to the on state, the control may be terminated.

When it is confirmed in step 500 that the safety option is in the on state, the controller 30 may confirm whether there is a heater being currently working among one or more heaters included in the cooking appliance 10 in step 501.

In another embodiment, when the cooking appliance 10 does not have the safety option setting function, steps 500, 520, 521, and 522 may be omitted. In this case, when the operation of the cooking appliance 10 is started, the controller 30 may first perform step 501 illustrated in Fig. 7.

When there is a heater being currently working in step 501, step 516 may be performed. When the heating controller 130 corresponding to another heater other than the heater being currently working is changed to the on state in step 516, the heating switch corresponding to the heating controller 130 of another heater having been changed to the on state is closed, so that another heater may be activated in step 517. In step 516, when the heating controller of another heater is not changed to the on state, the control may be terminated.

When it is confirmed in step 501 that any one of all heaters is not being working, the controller 30 may confirm whether the safety controller 163 is changed from the off state to the on state in step 502.

When it is confirmed that the safety controller 163 is not changed to the on state in step 502, the controller 30 may confirm whether one of all the heating controllers 130 is in the on state in step 514.

When it is confirmed in step 514 that all the heating controllers 130 are in the off state, the controller 30 may perform step 502 again.

When it is confirmed in step 514 that one of all the heating controllers 130 is in the on state, the controller 30 may perform a second warning operation in step 515, and then terminate the control. When the second warning operation is performed, the controller 30 may be configured to control an image or character displayed on the display panel 150 to flicker. In another example, when the second warning operation is performed, the controller 30 may be configured to control a warning sound or a warning voice to be output through the speaker. In still another example, when the second warning operation is performed, the controller 30 may be configured to control the operation indicator lamp 160 to flicker.

In another embodiment, when it is confirmed in step 514 that one of all the heating controllers 130 is in the on state, the controller 30 may terminate the control without performing the second warning operation.

When it is confirmed in step 502 that the safety controller 163 is changed to the on state, the controller 30 may confirm whether all the heating controllers 130 are in the off state in step 503. When it is confirmed in step 502 that the safety controller 163 is in the on state, the controller 30 may turn on lighting of the safety controller status display area 165.

Even when it is confirmed in step 502 that the safety controller 163 is in the on state, the controller 30 may maintain the safety switch SS in the open state.

When it is confirmed in step 503 that one of all the heating controllers 130 is in the on state, the controller 30 may be configured to change the safety controller 163 to the off state in step 504. When the safety controller 163 is changed to the off state, the controller 30 may turn off lighting of the safety controller status display area 165. After step 504 is performed, the controller 30 may perform step 501 again.

When it is confirmed that all the heating controllers 130 are in the off state in step 503, the controller 30 may confirm whether one of all the heating controllers 130 is changed to the on state in step 505.

When it is confirmed that the heating controller 130 is not changed to the on state in step 505, the controller 30 may confirm whether the first waiting time elapses in step 506. The first waiting time may be set differently according to embodiments.

When it is confirmed in step 506 that the first waiting time has not elapsed, the controller 30 may perform step 505 again.

When it is confirmed in step 506 that the first waiting time elapses, the controller 30 may perform a first warning operation in step 507. When the first warning operation is performed, the controller 30 may be configured to control the image or character displayed on the display panel 150 to flicker. In another example, when the first warning operation is performed, the controller 30 may be configured to control a warning sound or a warning voice to be output through the speaker. In still another example, when the first warning operation is performed, the controller 30 may be configured to control the operation indicator lamp 160 to flicker.

While the first warning operation is performed, the controller 30 may confirm whether one of all the heating controllers 130 is changed to the on state in step 508.

When one of all the heating controllers 130 is changed to the on state in step 508, the heating switch HS may be closed in step 512. When it is confirmed in step 508 that one of all the heating controllers 130 is changed to the on state, the controller 30 may be configured to control the safety switch SS corresponding to the heating controller having been changed to the on state to be closed in step 513. Accordingly, power may be supplied to the heater 120 corresponding to the heating controller having been changed to the on state through the first power supply line L1 and the second power supply line L2. Accordingly, the heater 120 corresponding to the heating controller having been changed to the on state may be activated.

When it is confirmed in step 508 that the heating controller 130 is not changed to the on state, the controller 30 may confirm whether operation other than operation of the heating controller 130 has occurred in step 509. An example of the operation other than operation of the heating controller 130 may include the opening or closing of the door 210.

When it is confirmed in step 509 that operation other than operation of the heating controller 130 has occurred, the controller 30 may terminate the first warning operation in step 511 and terminate the control.

When it is confirmed in step 509 that operation other than operation of the heating controller 130 has not occurred, the controller 30 may confirm whether a predetermined second waiting time elapses in step 510. The second waiting time may be set differently according to embodiments.

When it is confirmed in step 510 that the second waiting time has not elapsed, the controller 30 may perform steps 507 to 509 again.

When it is confirmed in step 510 that the second waiting time elapses, the controller 30 may be configured to change the safety controller 163 to an off state in step 504. When the safety controller 163 is changed to the off state, the controller 30 may turn off lighting of the safety controller status display area 165. After step 504 is performed, the controller 30 may perform step 501 again.

When the heating controller 130 is changed to the on state in step 505, the heating switch HS may be closed in step 512. When it is confirmed in step 505 that the heating controller 130 is changed to the on state, the controller 30 may be configured to control the safety switch SS to be closed in step 513. Accordingly, power may be supplied to the heater 120 through the first power supply line L1 and the second power supply line L2 such that the heater 120 works.

In other words, when the heating controller 130 is changed to the on state while the safety controller 163 is in the on state and the heating controller 130 is in the off state, the controller 30 may be configured to control the safety switch SS to be closed.

According to this control, only when all the heating controllers 130 are in an off state and the user changes the safety controller 163 to an on state, the user can operate to activate the heater by operating the heating operation unit 130.

In one embodiment, the operation indicator lamp 160 may be turned on by closing the heating switch HS in step 512. Accordingly, the user may recognize that the heater 120 is being working or recognize that the heating controller 130 is in an on state.

In another embodiment, the operation indicator lamp 160 may be turned on by closing the safety switch SS in step 513. Accordingly, the user may recognize that the safety function is activated.

After the heater 120 is activated 513, step 516 may be performed. When the heating controller 130 corresponding to another heater other than the heater being currently working is changed to the on state in step 516, the heating switch corresponding to the heating controller 130 of another heater having been changed to the on state is closed, so that another heater may be activated in step 517. In response to that, in step 516, the heating controller of another heater is not changed to the on state, the control may be terminated.

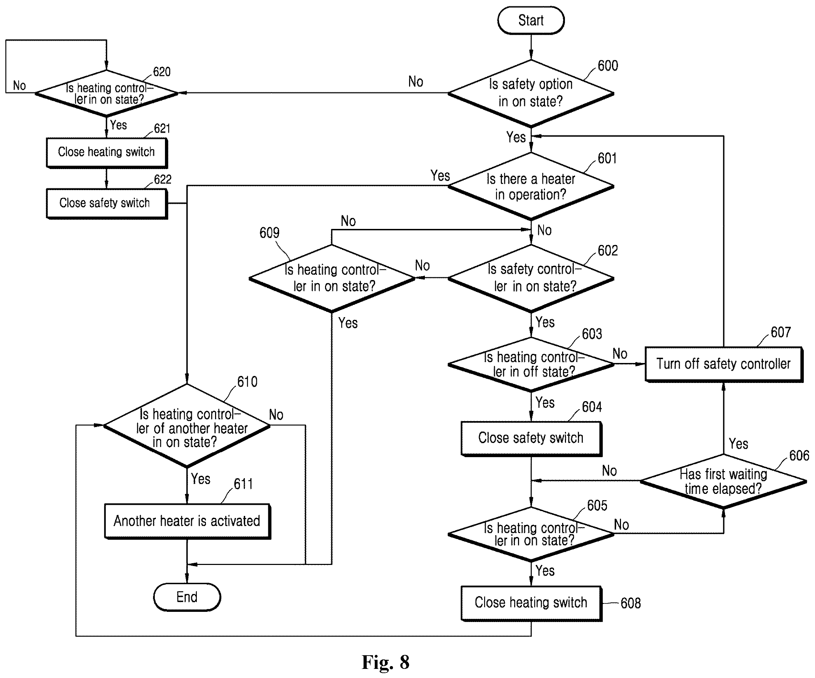

Fig. 8 is a flowchart of a method for controlling a cooking appliance according to still another embodiment.

When the safety controller 163 is in the off state and the safety switch SS is in the open state, the controller 30 may confirm whether the safety option is in the on state in step 600.

When it is confirmed in step 600 that the safety option is in the off state, the controller 30 may confirm whether one of all the heating controllers 130 is changed to the on state in step 620.

When it is confirmed in step 620 that the heating controller having been changed to the on state is not present, the controller 30 may perform step 620 again.

When one of all the heating controllers 130 is changed to the on state in step 620, the heating switch HS corresponding to the heating controller having been changed to the on state may be closed in step 621.

When it is confirmed in step 620 that one of all the heating controllers 130 is changed to the on state, the controller 30 may be configured to control the safety switch SS corresponding to the heating controller having been changed to the on state to be closed in step 622. Accordingly, power may be supplied to the heater 120 corresponding to the heating controller having been changed to the on state through the first power supply line L1 and the second power supply line L2. Accordingly, the heater 120 corresponding to the heating controller having been changed to the on state may be activated.

Thereafter, when the heating controller of another heater is changed to the on state in step 610, another heater may be activated by closing the heating switch corresponding to the heating controller 130 of another heater having been changed to the on state in step 611. In response to that, in step 610, the heating controller of another heater is not changed to the on state, the control may be terminated.

When it is confirmed in step 600 that the safety option is in the on state, the controller 30 may confirm whether there is a heater being currently working among one or more heaters included in the cooking appliance 10 in step 601.

In another embodiment, when the cooking appliance 10 does not have the safety option setting function, steps 600, 620, 621, and 622 may be omitted. In this case, when the operation of the cooking appliance 10 is started, the controller 30 may first perform step 601 illustrated in Fig. 8.

Upon determination that there is a heater being currently working in step 601, step 610 may be performed. When the heating controller 130 corresponding to another heater other than the heater being currently working is changed to the on state in step 610, the heating switch corresponding to the heating controller 130 of another heater having been changed to the on state is closed, so that another heater may be activated in step 611. In response to that, in step 610, the heating controller of another heater is not changed to the on state, the control may be terminated.

When it is confirmed in step 601 that all heaters are not working, the controller 30 may confirm whether the safety controller 163 is changed from the off state to the on state in step 602.

When it is confirmed in step 602 that the safety controller 163 is not changed to the on state, the controller 30 may confirm whether one of all the heating controllers 130 is in the on state in step 609.

When it is confirmed in step 609 that all the heating controllers 130 are in the off state, the controller 30 may perform step 602 again.

When it is confirmed in step 609 that one of all the heating controllers 130 is in the on state, the controller 30 may terminate the control. In another embodiment, when it is confirmed in step 609 that one of all the heating controllers 130 is in the on state, the controller 30 may perform a second warning operation to be described hereinafter and then terminate the control.

When it is confirmed in step 602 that the safety controller 163 is changed to the on state, the controller 30 may confirm whether all the heating controllers 130 are in the off state in step 603. When it is confirmed in step 602 that the safety controller 163 is in the on state, the controller 30 may turn on lighting of the safety controller status display area 165.

When it is confirmed that all the heating controllers 130 are in the off state in step 603, the controller 30 may be configured to control the safety switch SS to be closed in step 604.

When it is confirmed in step 603 that one of all the heating controllers 130 is in the on state, the controller 30 may be configured to change the safety controller 163 to the off state in step 607. When the safety controller 163 is changed to the off state, the controller 30 may turn off lighting of the safety controller status display area 165. After step 607 is performed, the controller 30 may perform step 601 again.

After step 604 is performed, the controller 30 may confirm whether one of all the heating controllers 130 is changed to the on state in step 605.

When it is confirmed that the heating controller 130 is not changed to the on state in step 605, the controller 30 may confirm whether the first waiting time elapses in step 606. The first waiting time may be set differently according to embodiments.

When it is confirmed in step 606 that the first waiting time has not elapsed, the controller 30 may perform step 605 again.

When it is confirmed in step 606 that the first waiting time elapses, the controller 30 may be configured to change the safety controller 163 to the off state in step 607. The controller 30 may be configured to change the safety switch SS to the open state. When the safety controller 163 is changed to the off state, the controller 30 may turn off lighting of the safety controller status display area 165. After step 607 is performed, the controller 30 may perform step 601 again.

Under steps 602 to 607, when the heating controller 130 is not operated within a predetermined time (first waiting time) after the safety controller 163 has been changed from the off state to the on state, the safety controller 163 is automatically changed to the off state. According to this control, even when the safety controller 163 is changed to the on state, when the heating controller 130 is not operated within a predetermined time, the safety controller 163 returns to the off state again, thereby maintaining the cooking appliance 10 in a safer state.

When the heating controller 130 is changed to the on state in step 605, the heating switch HS may be closed in step 608. Accordingly, power may be supplied to the heater 120 through the first power supply line L1 and the second power supply line L2 such that the heater 120 works.

In other words, the controller 30 may be configured to control the safety switch SS to be closed when the safety controller 163 is in the on state and the heating controller 130 is in the off state.

According to this control, only when all the heating controllers 130 are in an off state and the user changes the safety controller 163 to an on state, the user can operate to activate the heater by operating the heating operation unit 130.

In one embodiment, the operation indicator lamp 160 may be turned on by closing the heating switch HS in step 608. Accordingly, the user may recognize that the heater 120 is being working or recognize that the heating controller 130 is in an on state.

In another embodiment, the operation indicator lamp 160 may be turned on by closing the safety switch SS in step 604. Accordingly, the user may recognize that the safety function is activated.

After the heater 120 is activated 608, step 610 may be performed. When the heating controller 130 corresponding to another heater other than the heater being currently working is changed to the on state in step 610, the heating switch corresponding to the heating controller 130 of another heater having been changed to the on state is closed, so that another heater may be activated in step 611. In response to that, in step 610, the heating controller of another heater is not changed to the on state, the control may be terminated.

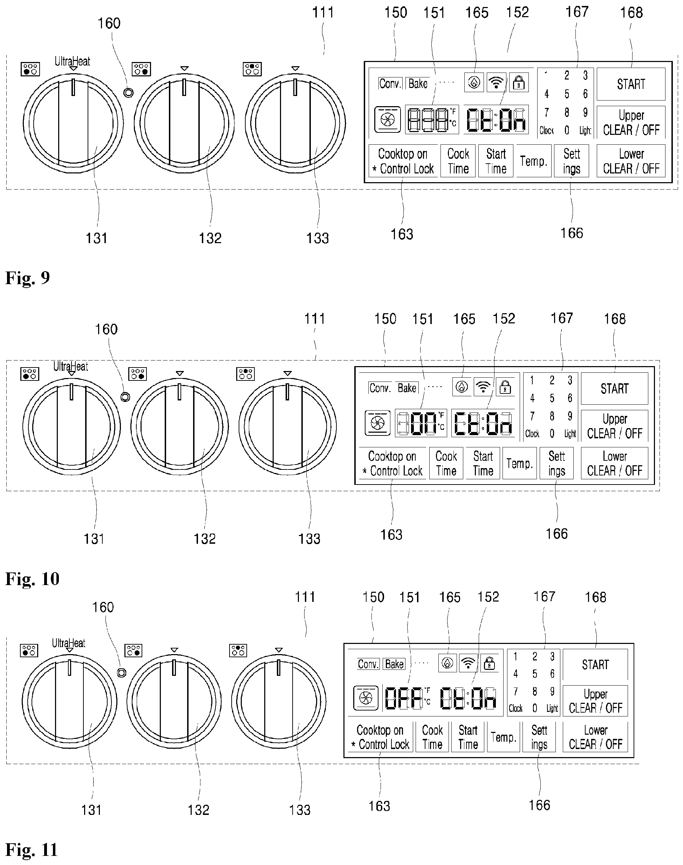

Figs. 9 to 11 are diagrams of an example process in which a user sets a safety option of a cooking appliance according to an embodiment.

Referring to Fig. 9, the user may press or touch a setting controller 166 included in the display 150. When the user presses or touches the setting controller 166, a menu for setting a function of the cooking appliance may be displayed in a second display area 152.

Whenever the user presses or touches the setting controller 166, the menu displayed on the second display area 152 may be changed. For example, when the user presses or touches the setting controller 166 a predetermined number of times (for example, 8 times), a safety option setting menu (for example, 'CtOn') may be displayed in the second display area 152. While the safety option setting menu (for example, 'CtOn') is displayed in the second display area 152, the user may set the safety option to an on state or an off state by pressing or touching a preset setting change controller (for example, a '1' key of a numeric input area 167).

For example, when the user presses the '1' key of the numeric input area 167 in a state in which the safety option setting menu (for example, CtOn) is displayed in the second display area 152 as shown in Fig. 9, a message (for example, 'ON') indicating that the safety option is in the on state may be displayed in a first display area 151 as shown in Fig. 10. As shown in Fig. 10, when the user presses the '1' key of the numeric input area 167 again in a state in which a message (for example, 'ON') indicating that the safety option is in the on state is displayed in the first display area 151, a message (for example, 'OFF') indicating that the safety option is in the off state may be displayed in the first display area 151 as shown in Fig. 11. As shown in Fig. 11, when the user presses the '1' key of the numeric input area 167 again in a state in which a message (for example, 'OFF') indicating that the safety option is in the off state is displayed in the first display area 151, a message (for example, 'ON') indicating that the safety option is in the on state may be displayed again in the first display area 151 as shown in Fig. 10.

When the user presses or touches a setting completion controller 168 in a state in which 'ON' or 'OFF' is displayed on the first display area 151 via operation of the setting change controller (for example, the '1' key of the number input area 167), the setting of the safety option may be completed. For example, when the user presses or touches the setting completion controller 168 in a state in which 'ON' is displayed in the first display area 151, the safety option of the cooking appliance may be set to an on state. For example, when the user presses or touches the setting completion controller 168 in a state in which 'OFF' is displayed in the first display area 151, the safety option of the cooking appliance may be set to an off state.

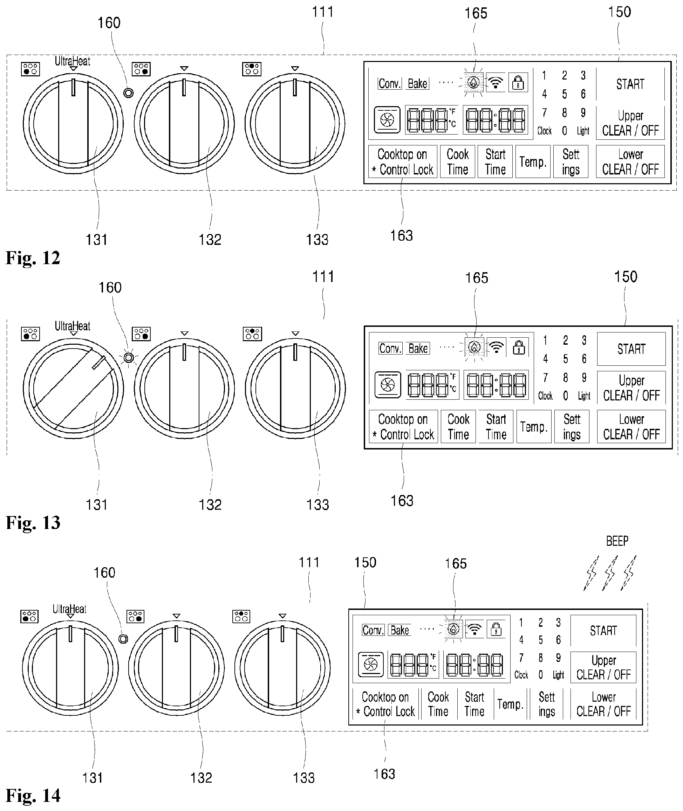

Figs. 12 to 14 are diagrams of an embodiment in which a user operates a control panel of a cooking appliance.

When the heater is not activated, as shown in Fig. 3, both lighting of the operation indicator lamp 160 and lighting of the safety controller status display area 165 may be in a turned-off state. The safety controller 163 may be maintained in an off state.

In a state in which all of the heating controllers 131 to 135 and 220 are turned off and all heaters are not being driven, the user may press or touch the safety controller 163. When the user presses or touches the safety controller 163 to change the safety controller 163 from the off state to the on state, the lighting of the safety controller status display area 165 may be turned on as shown in Fig. 12.

When the safety controller 163 is in the on state and all of the heating controllers 131 to 135 and 220 are in the off state, the user rotates the first heating controller 131 to change the first heating controller 131 to the on state, such that the operation of the heater disposed in the first heating area 121 corresponding to the first heating controller 131 may be activated. In this case, as shown in Fig. 13, lighting of the operation indicator lamp 160 may be turned on.

After the user rotates the first heating controller 131 in a state in which the safety function is activated by the user pressing or touching the safety controller 163 such that the heater disposed in the first heating area 121 works, the user operates another heating controller 132 to 135 and 220, an operation of another heater corresponding to the operated heating controller may be immediately activated.

In an embodiment, when the user presses or touches the safety controller 163 when the safety controller 163 is in the off state and at least one of the heating controllers 131 to 135 and 220 is in the on state, the controller 30 may be configured to maintain the safety controller 163 in the on state from a time point when the user presses or touches the safety controller 163 until the first waiting time elapses.

When the heating controller being in the on state is changed to the off state before the first waiting time elapses from the time point at which the user presses or touches the safety controller 163, the user may operate the heating controllers 131 to 135 and 220 such that the heater works without pressing or touching the safety controller 163 again.

When the heating controller being in the on state is not changed to the off state until the first waiting time elapses from the time point at which the user presses or touches the safety controller 163, the controller 30 may be configured to change the safety controller 163 to the off state. Therefore, a user who wants to activate the operation of the heater needs to press or touch the safety controller 163 again.

In an embodiment, when the user presses or touches the safety controller 163 while the safety controller 163 is in the off state and at least one of the heating controllers 131 to 135 and 220 is in the on state, the lighting of the safety controller status display area 165 may be maintained in the off state. When the user changes the heating controller being in the on state to the off state before the first waiting time elapses, the lighting of the safety controller status display area 165 may be turned on.

In another embodiment, when the user presses or touches the safety controller 163 while the safety controller 163 is in the off state and at least one of the heating controllers 131 to 135 and 220 is in the on state, the controller 30 may immediately change the safety controller 163 to the off state. At this time, even when the user presses or touches the safety controller 163, the lighting of the safety controller status display area 165 may not be turned on.

In an embodiment, as illustrated in Fig. 12, when the user does not perform any operation until the second waiting time elapses in a state in which the lighting of the safety controller status display area 165 is turned on, the controller 30 may be configured to change the safety controller 163 to an off state. Accordingly, the lighting of the safety controller status display area 165 may also be turned off.

In another embodiment, as illustrated in Fig. 12, when the user does not perform any operation until the second waiting time elapses in a state in which the lighting of the safety controller status display area 165 is turned on, the controller 30 may perform a warning operation. When the warning operation is performed, a warning message or a warning sound may be output through the speaker as illustrated in Fig. 14. In another example, when the warning operation is performed, the operation indicator lamp 160 may flicker or the safety controller status display area 165 may flicker. In another example, when a warning operation is performed, a specific icon or character of the display panel 150 may flicker. In still another example, when a warning operation is performed, a warning message or an error code may be displayed and/or flicker through the display panel 150.

In an embodiment, as illustrated in Fig. 13, when the safety controller 163 is in the on state, the first heating controller 131 is in the on state, and only the operation of the heater corresponding to the first heating controller 131 is being activated, the user changes the first heating controller 131 to the off state, such that the operation of the heater may be stopped. The controller 30 may maintain the safety controller 163 in the on state until the third waiting time elapses from the time point at which the operation of the heater is stopped. While the safety controller 163 is maintained in the on state, the lighting of the safety controller status display area 165 may be maintained in the turned-on state.

When the heating controllers 131 to 135 and 220 are changed to the on state before the third waiting time elapses from the time point at which the operation of the heater is stopped, the heater may be activated. When the heating controllers 131 to 135 and 220 are not changed to the on state until the third waiting time elapses from the time point at which the operation of the heater is stopped, the controller 30 may be configured to change the safety controller 163 to the off state. When the safety controller 163 is changed to the off state, the lighting of the safety controller status display area 165 may be turned off.

Although the disclosure has been described above with reference to the drawings illustrated, the disclosure is not limited to the embodiments and drawings disclosed in the disclosure, and various modifications may be made thereto by a person skilled in the art. Although the effects according to the configuration of the disclosure are not explicitly described while illustrating the embodiments of the disclosure, the predictable effects therefrom should also be acknowledged.

## Claims

1. A cooking appliance (10) comprising:
a heater (120);
a heating controller (130) configured to control an operation of the heater (120);
a safety controller (163);
a heating switch (HS) connected between an external power source (1) and the heater (120);
a safety switch (SS) connected between the external power source (1) and the heater (120); and
a controller (30) configured to control an open or closed state of the safety switch (SS) according to an operation of the heating controller (130) or operation of the safety controller (163),
wherein when the safety controller (163) is changed from an off state to an on state while the heating controller (130) is in an on state, the controller (30) is configured to maintain the safety controller (163) in an on state during a predetermined first waiting time.

2. The cooking appliance (10) of claim 1, wherein when the heating controller (130) is not changed to the off state for the first waiting time, the controller (30) is configured to change the safety controller (163) to the off state.

3. The cooking appliance (10) of claim 1 or 2, wherein when the heating controller (130) is changed to the on state while the safety controller (163) is in the on state and the heating controller (130) is in the off state, the controller (30) is configured to control the safety switch (SS) to be closed.

4. The cooking appliance (10) of any one of the preceding claims, wherein when the heating controller (130) is not changed to the on state during a predetermined second waiting time while the safety controller (163) is in the on state and the heating controller (130) is in the off state, the controller (30) is configured to change the safety controller (163) to the off state.

5. The cooking appliance (10) of any one of the preceding claims, wherein when both the heating switch (HS) and the safety switch (SS) are opened while the safety controller (163) is in the on state and both the heating switch (HS) and the safety switch (SS) are closed, the controller (30) is configured to maintain the safety controller (163) in the on state until a predetermined third waiting time elapses.

6. The cooking appliance (10) of claim 5, wherein when the heating controller (130) is changed to the on state before the third waiting time elapses, the controller (30) is configured to control the heating switch (HS) and the safety switch (SS) to be closed.

7. The cooking appliance (10) of claim 5 or 6, wherein when the heating controller (130) is not changed to the on state until the third waiting time elapses, the controller (30) is configured to change the safety controller (163) to the off state.

8. The cooking appliance (10) of any one of the preceding claims, wherein when the heating controller (130) is changed to the on state, the controller (30) is configured to control the heating switch (HS) to be closed.

9. A cooking appliance (10) comprising:
a heater (120);
a heating controller (130) configured to control operation of the heater (120);
a safety controller (163); and
a controller (30) configured to control operation of the heater (120) according to operation of the heating controller (130) or operation of the safety controller (163),
wherein the heater (120) works only while the safety controller (163) is in an on state,
wherein when the safety controller (163) is changed from an off state to the on state while the heating controller (130) is in an on state, the controller (30) is configured to maintain the safety controller (163) in the on state during a predetermined first waiting time.

10. The cooking appliance (10) of claim 9, wherein when the heating controller (130) is not changed to the off state for the first waiting time, the controller (30) is configured to change the safety controller (163) to the off state.

11. The cooking appliance (10) of claim 9 or 10, wherein when the heating controller (130) is changed to the on state while the safety controller (163) is in the on state and the heating controller (130) is in the off state, the controller (30) is configured to control the heater (120) to be activated.

12. The cooking appliance (10) of claim 9, 10 or 11, wherein when the heating controller (130) is not changed to the on state during a predetermined second waiting time while the safety controller (163) is in the on state and the heating controller (130) is in the off state, the controller (30) is configured to change the safety controller (163) to the off state.

13. The cooking appliance (10) of claim 9, 10, 11 or 12, wherein when both the heating switch (HS) and the safety switch (SS) are opened while the safety controller (163) is in the on state and both the heating switch (HS) and the safety switch (SS) are closed, the controller (30) is configured to maintain the safety controller (163) in the on state until a predetermined third waiting time elapses.

14. The cooking appliance (10) of claim 13, wherein when the heating controller (130) is changed to the on state before the third waiting time elapses, the controller (30) is configured to control the heater (120) to be activated.

15. The cooking appliance (10) of claim 13 or 14, wherein when the heating controller (130) is not changed to the on state until the third waiting time elapses, the controller (30) is configured to change the safety controller (163) to the off state.
